# EUROPÄISCHE PATENTSCHRIFT

(11) **EP 0 830 910 B1**
(45) Veröffentlichungstag und Bekanntmachung des Hinweises auf die Patenterteilung: **11.06.2003**
(21) Anmeldenummer: 97106918.2
(22) Anmeldetag: 25.04.1997
(51) Int. Cl.: B21K 21/08, B21D 22/02

(54) **Verfahren zum Herstellen von Formteilen**
Method of manufacturing moulded elements
Procédé de fabrication de pièces moulées

(30) Priorität: 19.09.1996 DE 19638441
(43) Veröffentlichungstag der Anmeldung: 25.03.1998
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Degwert, Hartmut, Dipl.-Phys.

(56) Entgegenhaltungen:
- US-A- 3 739 620
- US-A- 5 029 896
- US-A- 5 104 193
- PATENT ABSTRACTS OF JAPAN vol. 12, no. 83 (M-677), 16.März 1988 & JP 62 224442 A (GIKEN ENG KK), 1.Oktober 1987,
- PATENT ABSTRACTS OF JAPAN vol. 7, no. 25 (M-190), 2.Februar 1983 & JP 57 181739 A (TAKAKAZU MARUMO), 9.November 1982,
- PATENT ABSTRACTS OF JAPAN vol. 16, no. 456 (M-1314), 22.September 1992 & JP 04 160239 A (NAKAZAWA CHIHARU), 3.Juni 1992,

## Beschreibung

Die Erfindung betrifft ein Verfahren zum Herstellen von Formteilen.

Ein solches lasttragendes Formteil kann auf den verschiedensten Gebieten der Technik verwendet werden. Als Beispiel werden nachfolgend verschiedene Anwendungen auf dem Gebiet von Fahrzeuginsassen-Rückhaltesystemen erläutert. Es wird jedoch ausdrücklich darauf hingewiesen, daß die Erfindung auf allen Gebieten der Technik angewendet werden kann.

Ein Formteil, auf welches die Erfindung angewendet werden kann, ist beispielsweise eine Sperrklinke, die dafür verwendet werden kann, einen Gurtstrafferantrieb mit der Gurtspule eines Gurtaufrollers zu verbinden. Die Sperrklinke ist Teil einer Kupplung, welche im Normalzustand den Gurtaufroller vom Gurtstrafferantrieb trennt, so daß die Gurtspule des Gurtaufrollers frei drehbar ist. Wenn allerdings der Gurtstrafferantrieb aktiviert wird, beispielsweise von einem am Fahrzeug angebrachten Sensor, der eine Überschreitung von vorgegebenen Grenzen der Fahrzeugverzögerung feststellt, muß der Gurtstrafferantrieb innerhalt kürzester Zeit mit der Gurtspule gekoppelt werden, um eine Drehung der Gurtspule in der Gurtband-Aufwickelrichtung hervorzurufen. Aufgrund der geforderten kurzen Ansprechzeit sowie des zu übertragenden Drehmoments ist die Sperrklinke dabei hohen Belastungen ausgesetzt.

Um die geforderte Festigkeit zuverlässig zu erreichen, wird die Sperrklinke üblicherweise als Sinterteil hergestellt. Auf diese Weise läßt sich neben der notwendigen Festigkeit auch die geforderte Formgenauigkeit erhalten. Alternativ kann ein solches Formteil auch durch spanende Bearbeitung eines Rohlings aus Stahl hergestellt werden. In jedem Fall ergeben sich hohe Herstellungskosten. Bekannt sind auch Kaltfließpreßteile aus Stahl. Die Herstellung derartiger Bauteile ist in der US-A 3 739 620 beschrieben. Hier wird ein Stahlrohr in einem Warmfornaverfahren in mehreren Schritten an einem Ende umgeformt und dabei aufgeweitet. Nachteilig ist hierbei der hohe Energieaufwand beim Umformen. Weiterhin ist bei Formteilen aus Stahl das vergleichsweise hohe Gewicht nachteilig.

Es ist auch bekannt, Preßteile aus Aluminium zu fertigen. In der JP 62224442, die als nächstkommender Stand der Technik angesehen wird, wird ein Spacer hergestellt, indem zunächst ein Rohling von einem Profil abgetrennt und anschließend gepreßt wird, um Ober- und Unterseite die gewünschte Form zu verleihen. Das aus den dabei geformten Rillen ausgetretene überschüsssige Material wird anschließend entfernt.

Die Erfindung schafft ein Verfahren, mit dem Formteile mit geringerem Aufwand als im Stand der Technik hergestellt werden können. Das erfindungsgemäße Verfahren enthält die in Anspruch 1 dargelegten Schritte. Dieses Verfahren macht sich die für den Fachmann überraschende Erkenntnis zunutze, daß Formteile aus einer Aluminiumlegierung trotz der eigentlich unzureichenden Festigkeit von Aluminiumlegierungen durchaus in der Lage sind, Formteile aus Stahl zu ersetzen. Durch das Umformen des Profilstücks in der Presse wird nämlich das Material kaltverfestigt, wodurch sich eine Festigungssteigerung von bis zu 60% ergeben kann. Ein derart kaltverfestigtes Formteil besitzt dann eine Festigkeit, die für die beabsichtigten Anwendungen ausreicht; je nach den zu vergleichenden Materialien läßt sich auch eine Festigkeit erzielen, die mit derjenigen von Formteilen aus Stahl vergleichbar ist. Somit läßt sich eine deutliche Gewichtseinsparung erzielen. Da außerdem das Profilstück, also der in das Formteil umzuformende Rohling, ausgehend von einem beispielsweise kontinuierlich zugeführten Profilmaterial hergestellt wird, ergibt sich ein besonders günstiges Herstellungsverfahren. Weiterhin wirkt sich günstig auf das Herstellungsverfahren aus, daß das Profilstück in konventionellen Pressen in die gewünschte Form gepreßt wird, also in Vorrichtungen, die gegenüber beispielsweise Sintervorrichtungen deutlich kostengünstiger und einfacher sind. Der Querschnitt des Profilmaterials entspricht der Projektion des herzustellenden Formteils zuzüglich eines Übermaßes entspricht. Diese beruht auf der Erkenntnis, daß der optimale Querschnitt für das Profilmaterial in besonders einfacher Weise dadurch bestimmt werden kann, daß eine Projektion des herzustellenden Formteils in eine Ebene vorgenommen wird. Zu der auf diese Weise erhaltenen Fläche wird dann ein Übermaß hinzugefügt, um den Querschnitt des Profilmaterials zu erhalten. Das Übermaß gewährleistet, daß beim Pressen des Profilstücks in die gewünschte Form ein ausreichend hoher Umformungsgrad auftritt, so daß die gewünschte Kaltverfestigung des Materials erzielt wird. Dieses Übermaß ist üblicherweise kleiner als etwa 25%; vorzugsweise beträgt das Übermaß zwischen etwa 10% und etwa 20%.

Gemäß einer bevorzugten Ausführungsform der Erfindung ist vorgesehen, daß das Profilmaterial einen Querschnitt hat, der an das herzustellende Formteil angepaßt ist. Diese Ausführungsform der Erfindung beruht auf der Erkenntnis, daß der Aufwand für die Herstellung der Formteile nochmals vermindert werden kann, wenn das Profilmaterial bereits mit einem Querschnitt bereitgestellt wird, der weitestgehend an die Gestalt des Formteils angepaßt ist. Zwar sind Aluminiumprofile in einer großen Vielzahl von Querschnittsformen verfügbar, jedoch wird nur selten ein vorhandenes Profil die Forderung erfüllen, daß sein Querschnitt dem Umriß der Gestalt des Formteils, eventuell mit einem vorgegebenen Übermaß, entspricht. Die Herstellung eines solchen Sonderprofils allein zum Zweck der Bereitstellung von Profilstücken, die sich in Rohlinge für die gewünschten Formteile durch Pressen umformen lassen, erfordert jedoch lediglich einen Aufwand, der im Vergleich zu den Einsparungen gegenüber herkömmlichen Herstellungsverfahren vernachlässigbar ist. Anders ausgedrückt wird durch das Bereitstellen eines geeignet gestalteten Profilmaterials, das mit wenig Aufwand kontinuierlich hergestellt werden kann, beispielsweise durch Strangpressen, eine große Anzahl von miteinander verbundenen Profilstücken erhalten, die nur noch voneinander getrennt werden müssen. Insbesondere gegenüber beispielsweise Sinterverfahren, bei denen jedes einzelne Formteil individuell hergestellt wird, ist die erzielte Vereinfachung offensichtlich.

Falls das Formteil eine Mittelachse hat, wird der Querschnitt des Profilmaterials vorzugsweise ausgehend von einer Projektion des Formteils in eine zur Mittelachse senkrechte Ebene erhalten. Bei dieser Projektionsrichtung ist der Querschnitt des Profilmaterials optimal an die Form von rotationssymmetrischen Formteilen angepaßt.

Wenn das Formteil eine allgemein flache Gestalt hat, wird der Querschnitt des Profilmaterials vorzugsweise ausgehend- von einer Projektion des Formteils in eine zur Erstreckungsebene des Formteils parallele Ebene erhalten. Bei dieser Projektionsrichtung ist der Querschnitt des Profilmaterials optimal an die Herstellung von allgemein flachen Formteilen angepaßt.

Gemäß der Erfindung kann vorgesehen sein, daß das Profilmaterial vor dem Ablängen weichgeglüht wird. Alternativ kann auch vorgesehen sein, daß das Profilstück weichgeglüht wird. Durch das Weichglühen kann eine Kaltverfestigung, die bereits beim Herstellen des Profilmaterials, beispielsweise durch Strangpressen, aufgetreten ist, wieder beseitigt werden, so daß Profilstücke aus einer gut umformbaren Aluminiumlegierung vorliegen.

Gemäß der Erfindung kann auch vorgesehen sein, daß das Formteil nach dem Pressen ausgehärtet wird, etwa durch Warmhärten oder Kalthärten. Auf diese Weise läßt sich die Festigkeit des gepreßten Formteils weiter steigern.

Weitere vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Figur 1 einen Längsschnitt durch ein Profilstück, das bei einem erfindungsgemäßen Verfahren verwendet werden kann;
- die Figuren 2 bis 5 schematisch vier Verfahrensschritte zum Herstellen eines Formteils;
- Figur 6 perspektivisch das mit dem in den Figuren 2 bis 5 dargestellten Verfahren hergestellte Formteil;
- Figur 7 in einer Draufsicht ein Formteil, das mit einem erfindungsgemäßen Verfahren hergestellt wurde;
- Figur 8 in einer Schnittansicht entlang der Linie VIII-VIII von Figur das Formteil von Figur 7;
- Figur 8a eine perspektivische Ansicht eines Profilmaterials, von welchem ausgehend das in den Figuren 7 und 8 gezeigte Formteil hergestellt werden kann;
- Figur 9 in einer Seitenansicht ein weiteres Formteil, das mit einem erfindungsgemäßen Verfahren hergestellt wurde;
- Figur 10 das entlang der Linie X-X von Figur 9 teilgeschnittene Formteil von Figur 9 in einer Draufsicht;
- Figur 11 in einer perspektivischen Ansicht ein weiteres Formteil, das mit einem erfindungsgemäßen Verfahren hergestellt wurde;
- Figur 12 in einer Draufsicht das Formteil von Figur 11; und
- Figur 13 eine perspektivische Ansicht eines Profilmaterials, von welchem ausgehend das in Figur 112 gezeigte Formteil hergestellt werden kann.

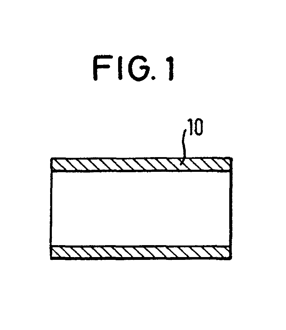

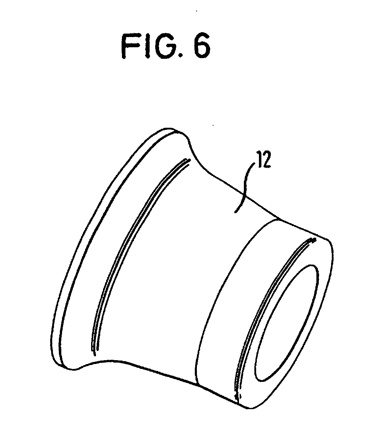

Anhand der Figuren 1 bis 6 wird nun schematisch ein Kaltpreßverfahren beschrieben, das einige Schritte mit dem erfindungsgemäßen Verfahren gemein hat. Wie beim erfindungsgemäßen Verfahren wird durch Ablangen eines (nicht dargestellten) Profilmaterials aus einer Aluminiumlegierung das in Figur 1 dargestellte Profilstück 10 erhalten. Das Profilmaterial kann beispielsweise auf einer Vorratsrolle bereitgehalten werden. Analog zum erfindungsgemäßen Verfahren wird die jeweilige Länge des Profilstücks ausgehend vom Volumen des herzustellenden Formteils so bestimmt, daß das Volumen des Profilstücks mindestens gleich dem Volumen des Formteils plus der im Laufe des Verfahrens auftretenden Volumenabnahme des Profilstücks durch Verdichtung des Materials ist, die aber sehr gering ist. Das Profilmaterial ist eine Aluminiumlegierung der Festigkeitsklassen F17 bis F50. Erfindungsgemäß wird vorzugsweise wird entweder das Profilmaterial vor dem Ablängen oder das hergestellte Profilstück 10 vor dem Weiterverarbeiten weichgeglüht, so daß die bei der Herstellung des Profilmaterials auftretende Kaltverfestigung der Aluminiumlegierung beseitigt ist und sich eine sehr gute Umformbarkeit des Materials ergibt.

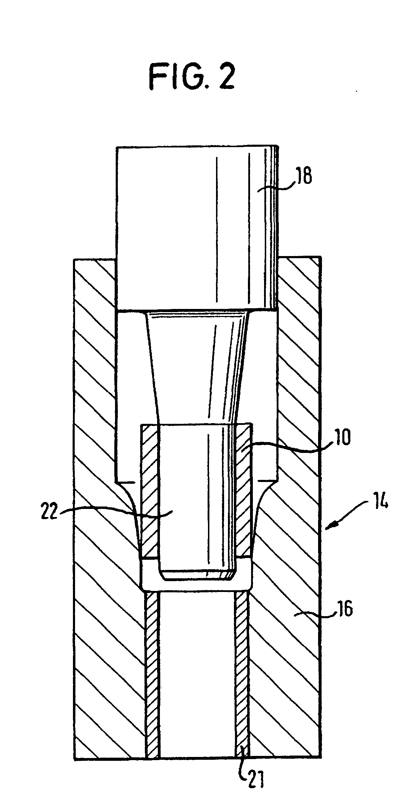

Das Profilstück 10 wird anschließend in eine Presse 14 eingelegt, die im wesentlichen aus einer Matrize 16 und einem Stempel besteht. Weiterhin ist im Inneren der Matrize 16 ein relativ zu dieser beweglicher Auswerfer 21 vorgesehen. In Figur 2 ist dargestellt, wie das Profilstück 10 in die Matrize 16 eingelegt wird. Anschließend wird der Stempel 18 in die Matrize 16 eingefahren, bis ein Stempelfortsatz 22, dessen Außendurchmesser geringfügig kleiner als der Innendurchmesser des Rohlings 10 ist, in diesen eingreift.

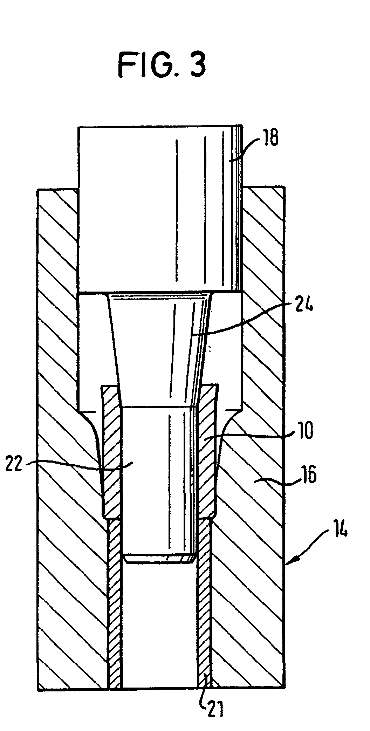

Wie in Figur 3 zu sehen ist, wird der Stempel 18 weiter in die Matrize 16 hineingedrückt, wodurch das Profilstück 10 zum einen in die Matrize 16 hineingedrückt wird, bis es an dem Auswerfer 21 anliegt, und zum anderen an seinem entgegengesetzten axialen Ende geringfügig mittels eines sich an den Stempelfortsatz 22 anschließenden Stempelkonus 24 aufgeweitet wird.

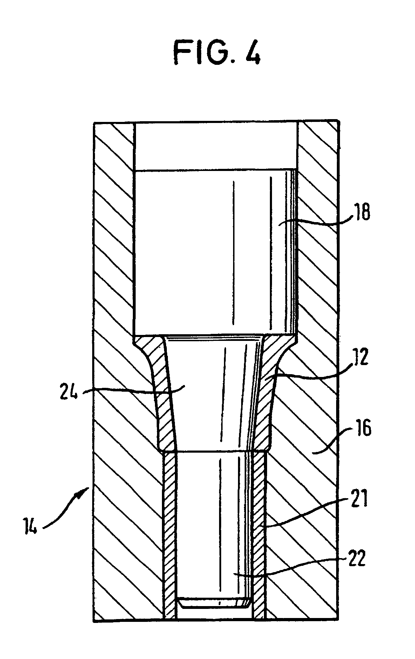

In Figur 4 ist zu sehen, daß der Stempel 18 vollständig in die Matrize 16 hineingedrückt wurde. Das Profilstück 10 ist dadurch in die gewünschte Form gepreßt worden, so daß ein Formteil 12 entstanden ist.

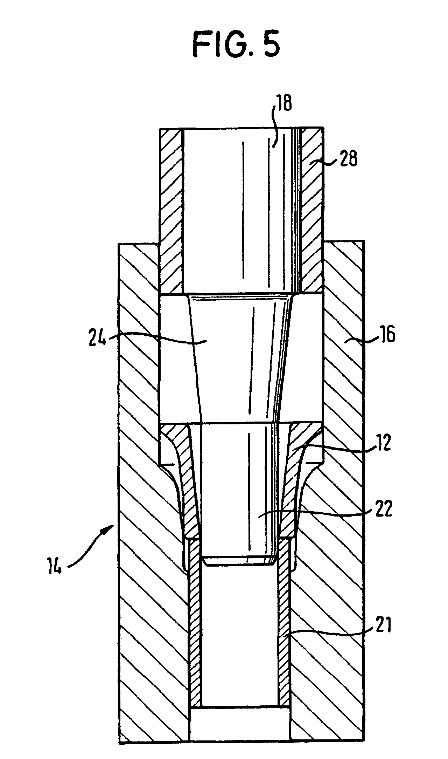

In Figur 5 ist dargestellt, daß das Formteil 12 mittels des Auswerfers 21 aus der Matrize 16 herausgedrückt wird. Falls es sich als notwendig herausstellt, kann am Stempel 18 auch ein in Figur 5 schematisch dargestellter Auswerferring 28 vorgesehen sein, um das Preßteil 12 vom Stempel 18 zu lösen.

Wie auch beim erfindungsgemäßen Verfahren wird beim Zusammenfahren des Stempels 18 und der Matrize 16 das in die Presse 14 eingelegte Profilstück 10 so stark umgeformt, daß eine Kaltverfestigung des Materials auftritt. Diese Kaltverfestigung kann zu einer Festigungssteigerung um bis zu 60% führen. Falls es sich als notwendig herausstellt, kann die Festigkeit des erzielten Formteils 12 weiter gesteigert werden, indem das Material des Formteils 12 nach dem Pressen ausgehärtet wird, beispielsweise durch Warmhärten oder Kalthärten. Falls das Volumen des Profilstücks durch geeignetes Ablängen gleich dem Volumen des zu erzielenden Formteils gewählt wurde, ergibt sich nach dem Pressen direkt das Formteil ohne daß eine Nachbearbeitung notwendig ist. Erfindungsgemäß ist jedoch Falls das Volumen des Profilstücks geringfügig größer als das Volumen des herzustellenden Formteils, so daß sich nach dem Pressen ein Rohling ergibt, der gegenüber dem herzustellenden Formteil einen Materialüberschuß aufweist. Dieser Materialüberschuß kann entweder als ein lokaler Ansatz vorliegen, der abgetrennt wird, oder als flächiger Überschuß, der abgetragen wird.

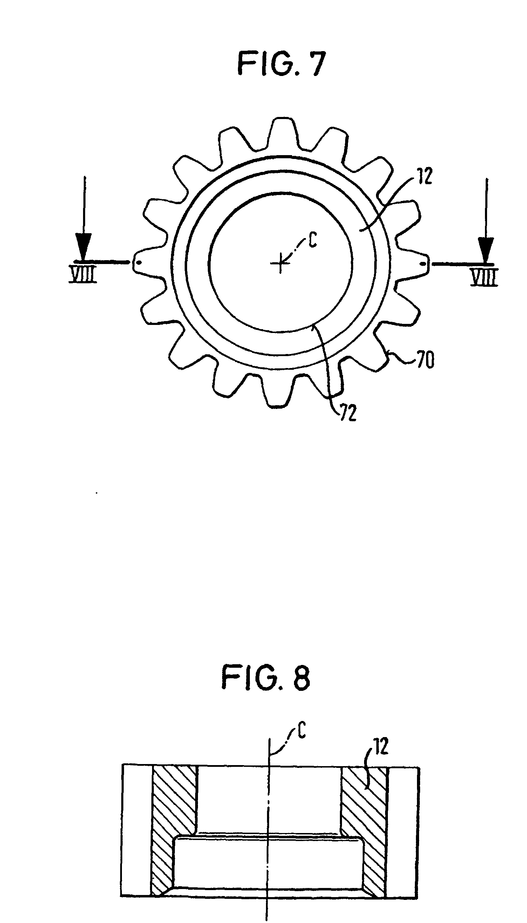

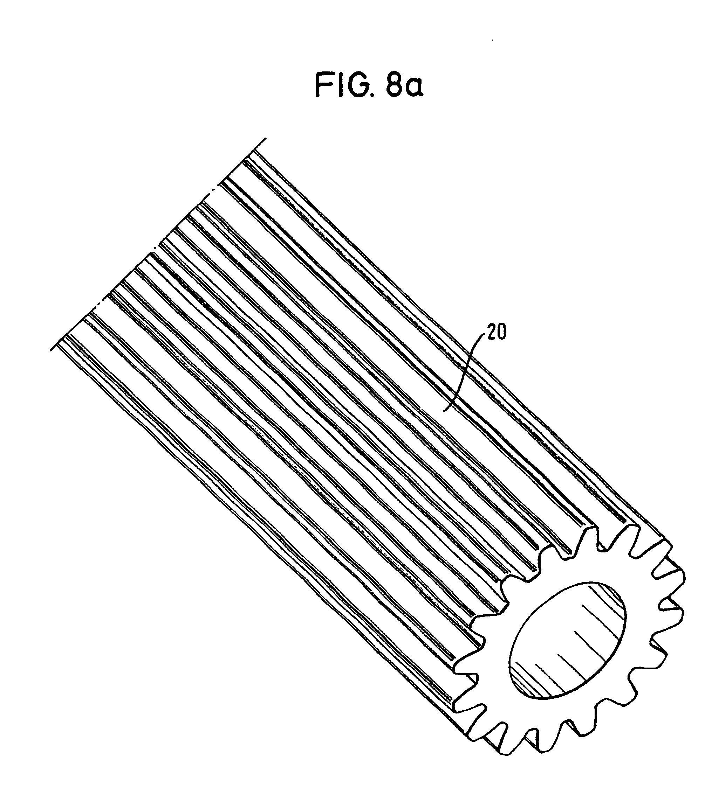

In den Figuren 7 und 8 ist ein Formteil dargestellt, das mit dem erfindungsgemäßen Verfahren hergestellt wurde. Das Formteil 12 ist in diesem Fall ein Zahnrad mit einer Öffnung entlang einer Mittelachse C, wobei die Öffnung als Stufenbohrung ausgeführt ist. Zur Bereitstellung eines geeigneten Profilmaterials wird zunächst das herzustellende Formteil analysiert, wobei eine Achse definiert wird, welche die Mittelachse C des Formteils ist. In eine zu dieser Achse C senkrechte Ebene, beispielsweise die Zeichnungsebene, wird das Formteil 12 projiziert. Somit ergibt sich eine Außenumfangslinie 70, vorgegeben von der Außenkontur des Zahnrads, und eine Innenumfangslinie 72, vorgegeben von dem Abschnitt der Stufenbohrung mit dem kleinsten Durchmesser. Zu dieser zwischen den beiden Umfangslinien vorgegebenen Fläche wird, um den tatsächlichen Querschnitt des zu verwendenden Profilmaterials zu erhalten, ein Übermaß hinzugefügt, das zwischen etwa 10% und etwa 20% beträgt. Es wird also als Ausgangsmaterial zur Herstellung des in den Figuren 7 und 8 dargestellten Formteils ein Profilmaterial 20 verwendet, das annähernd rohrförmig ist (siehe Figur 8a), wobei der Innendurchmesser dieses Rohres bestimmt ist durch den kleinsten Durchmesser der Öffnung des Zahnrades und wobei die Außenkontur bereits die Zähne aufweist, die dem zu fertigenden Zahnrad entsprechen. Unterschiede zwischen den Abmessungen des Profilmaterials und den Abmessungen des fertigen Formteils ergeben sich jedoch durch das oben dargestellte Übermaß. Die Länge, welche das durch Ablängen des Profilmaterials herzustellende Profilstück haben muß, ergibt sich, wie oben ausgeführt wurde, anhand des Volumens, welches das fertige Formteil 12 hat. Das so erhaltene Profilstück wird dann in das Formteil 12 in einer Presse umgeformt, welche an die Gestalt des herzustellenden Formteils angepaßt ist.

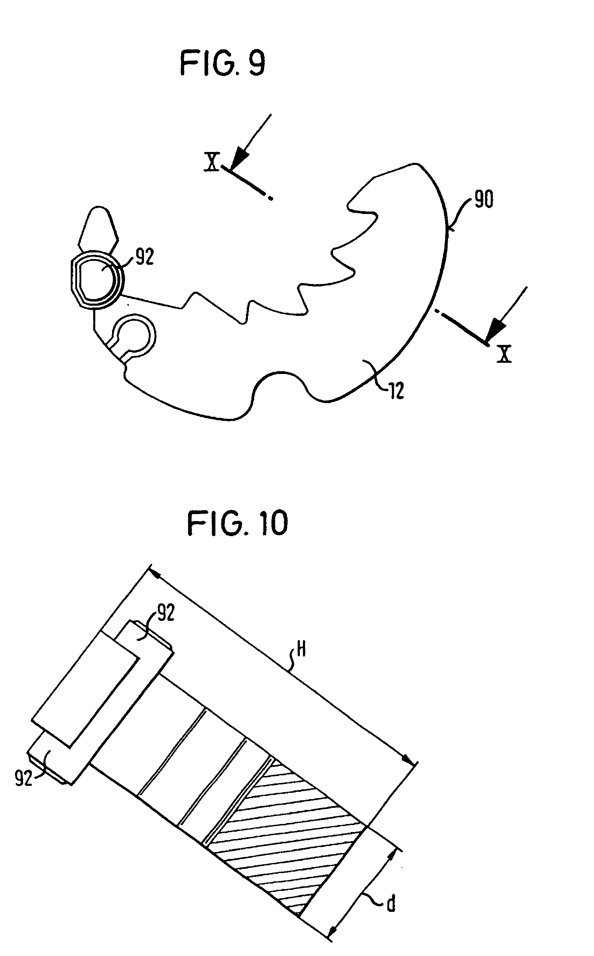

In den Figuren 9 und 10 ist ein weiteres Formteil 12 dargestellt, das mit dem erfindungsgemäßen Verfahren hergestellt wurde. Dieses Formteil 12 ist eine Sperrklinke, die beispielsweise dazu verwendet werden kann, einen Gurtstrafferantrieb mit einem Gurtaufroller zu verbinden. Bei einer Höhe H von etwa 20 mm und einer Dicke d von rund 7 mm ist diese Sperrklinke in der Lage, ein Drehmoment bis etwa 100 Nm zu übertragen. Auch bei diesem herzustellenden Formteil 12 wird der Querschnitt des als Ausgangspunkt zu verwendenden Profilmaterials ausgehend von einer Projektion des Formteil 12 in eine Ebene erhalten. Da das Formteil 12 in diesem Fall allgemein eben ist, wird die Projektion in eine Ebene vorgenommen, die parallel zur Erstreckungsebene des Formteil 12 ist, also in diesem Fall in die Zeichnungsebene. Die Außenkontur des Querschnittes des Profilmaterials entspricht somit der Umfangslinie 90 des Formteils 12. Hinzugefügt wird auch hier ein Übermaß. Das auf diese Weise erhaltene Profilmaterial entspricht also einer Stange, die allgemein sichelförmig ausgebildet ist, wobei an der Innenseite bereits die Zähne vorgesehen sind, welche das Formteil 12 aufweist. Das durch geeignetes Ablängen dieses Profilmaterials erhaltene Profilstück wird dann gepreßt, wobei im Laufe des dabei stattfindenden Umformens auch Lagerfortsätze 92 gebildet werden, die sich senkrecht zur Projektionsebene erstrecken.

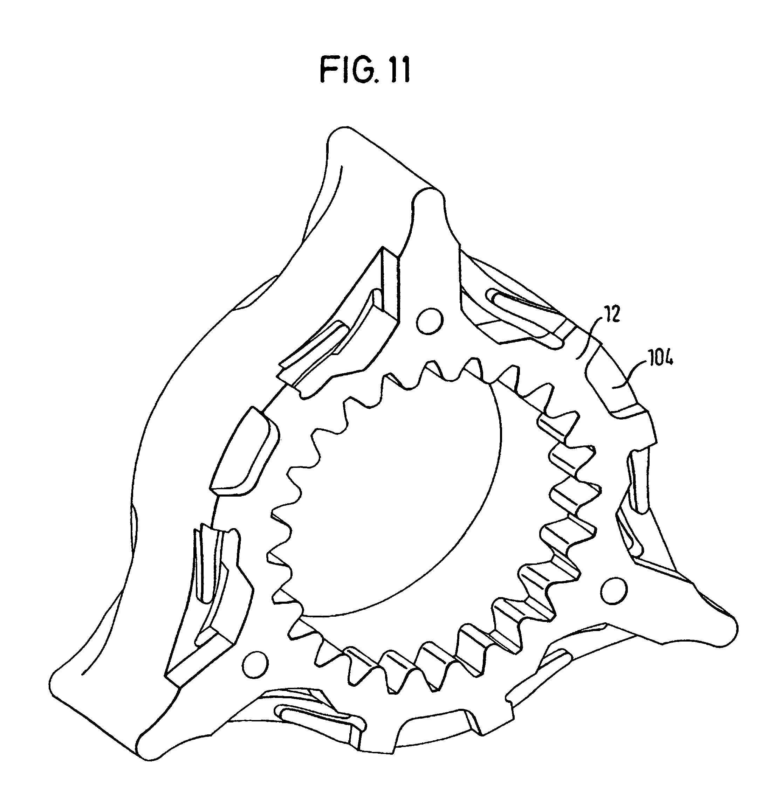

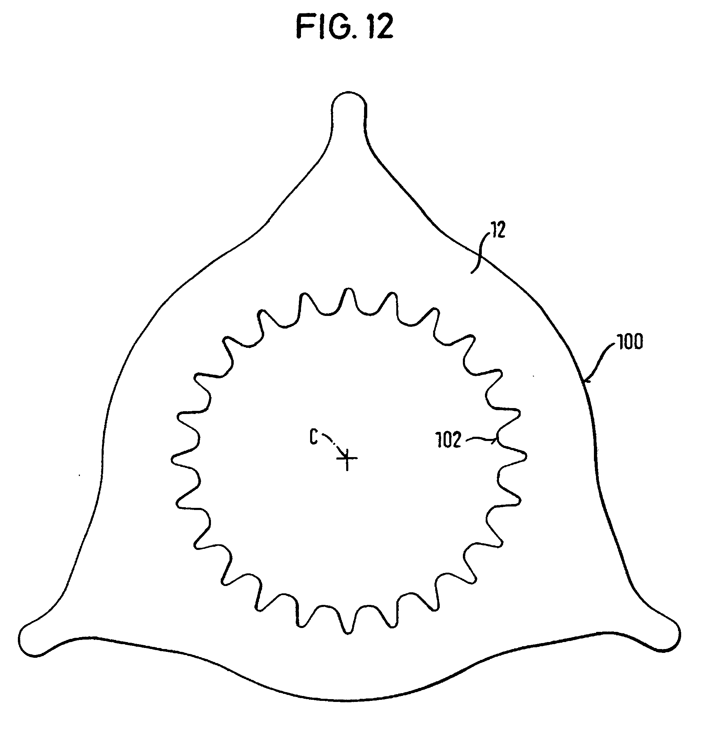

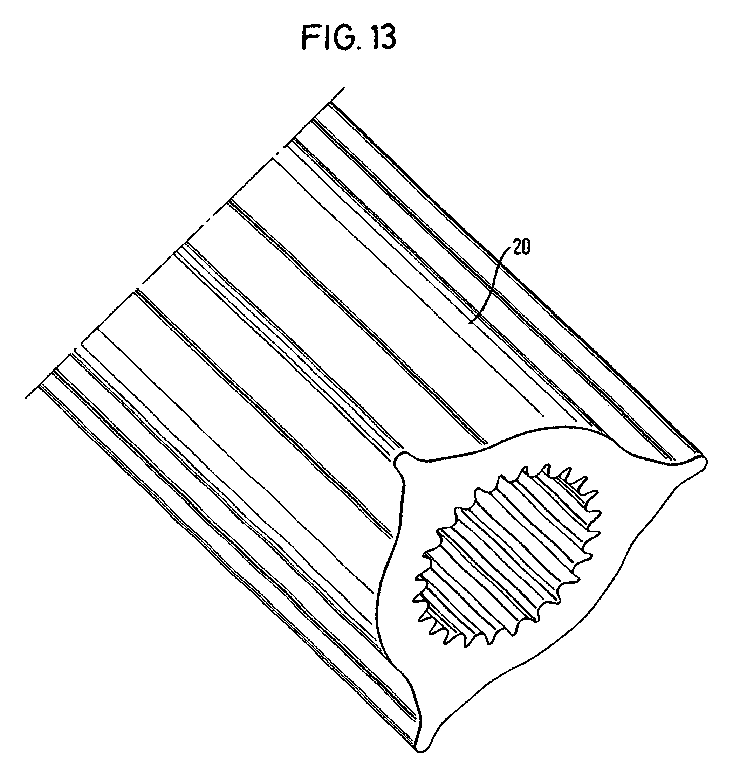

In den Figuren 11 und 12 ist ein weiteres Formteil 12 dargestellt, das mit dem erfindungsgemäßen Verfahren hergestellt wurde. In diesem Fall handelt es sich um einen Rotationskolben, wie er beispielsweise in einem Rotations-Gurtstrafferantrieb verwendet wird. Der Querschnitt des zu verwendenden Profilmaterials wird ähnlich dem Formteil aus den Figuren 7 und 8 durch Projektion in eine Ebene ermittelt, die senkrecht zur Mittelachse C ist. Auf diese Weise ergibt sich die Außenumfangslinie 100 und die Innenumfangslinie 102. Das zu verwendende Profilmaterial 20 ist somit eine Stange mit allgemein dreieckiger Außenkontur und gezahnter Innenöffnung (siehe Figur 13). Das nach Ablängen dieses Profilmaterials erhaltene Profilstück wird dann gepreßt, um das Formteil 12 zu erzielen. Beim dabei auftretenden Umformen lassen sich auch Ausnehmungen 104 (siehe Figur 11) erzielen.

Falls das herzustellende Formteil 12 Hinterschneidungen aufweist, können in der Presse auch Schieber verwendet werden, mit denen diese hinterschnittenen Stellen gepreßt werden.

## Patentansprüche

1. Verfahren zum Herstellen von Formteilen (12) mit den folgenden Schritten:
- ein Profilmaterial (20) aus einer Aluminiumlegierung wird bereitgestellt;
- durch Ablängen des Profilmaterials (20) wird ein Profilstück (10) von vorbestimmter Länge hergestellt;
- das Profilstück (10) wird in eine Presse (14) eingelegt;
- das Profilstück (10) wird in der Presse (14) in die gewünschte Form gepreßt,
wobei während des Pressens eine Kaltverfestigung des Materials auftritt und
wobei der Querschnitt des Profilmaterials (20) einer Projektion des herzustellenden Formteils (12) zuzüglich eines Übermaßes entspricht.

2. Verfahren nach Anspruch 1, **dadurch gekennzeichnet, daß** die Gestalt des fertigen Formteils (12) analysiert wird, indem eine Achse (C) und ein in einer zur Achse senkrechten Ebene liegender Umriß des Formteils (12) definiert werden.

3. Verfahren nach Anspruch 2, **dadurch gekennzeichnet, daß** die Länge des abgelängten Profilstücks (10) durch das axiale Maß der Gestalt des Formteils (12) bestimmt ist.

4. Verfahren nach einem der Ansprüche 2 und 3, **dadurch gekennzeichnet, daß** die Querschnittsform des Profilmaterials (20) sich von dem Umriß des Formteils (12) durch das Übermaß unterscheidet.

5. Verfahren nach einem der Ansprüche 2 bis 4, **dadurch gekennzeichnet, daß** das axiale Maß des Profilstücks (10) sich von dem axialen Maß des Formteils (12) durch das Übermaß unterscheidet.

6. Verfahren nach einem der Ansprüche 2 bis 5, **dadurch gekennzeichnet, daß** das Übermaß kleiner als etwa 25% ist.

7. Verfahren nach Anspruch 6, **dadurch gekennzeichnet, daß** das Übermaß zwischen etwa 10% und etwa 20% beträgt.

8. Verfahren nach einem der Ansprüche 2 bis 7, **dadurch gekennzeichnet, daß** die Achse die Mittelachse (C) des Formteils (12) ist und der Querschnitt des Profilmaterials (20) ausgehend von einer Projektion des Formteils (12) in die zur Mittelachse (C) senkrechte Ebene erhalten wird.

9. Verfahren nach einem der Ansprüche 2 bis 7, **dadurch gekennzeichnet, daß** das Formteil (12) eine allgemein flache Gestalt hat, die Achse (C) senkrecht zur Erstreckungsebene des Formteils (12) ist und der Querschnitt des Profilmaterials (20) ausgehend von einer Projektion des Formteils (12) in die zur Achse senkrechte Ebene erhalten wird.

10. Verfahren nach einem der Ansprüche 2 bis 9, **dadurch gekennzeichnet, daß** das Profilmaterial (20) mit der an das herzustellende Formteil (12) angepaßten Querschnittsform hergestellt wird.

11. Verfahren nach Anspruch 10, **dadurch gekennzeichnet, daß** die Querschnittsform des Profilmaterials (20) an den durch Projektion erhaltenen Umriß des Formteils (12) angepaßt ist.

12. Verfahren nach einem der vorhergehenden Ansprüche, **dadurch gekennzeichnet, daß** das Profilmaterial (20) die Festigkeitsklasse F17 bis F50 hat.

13. Verfahren nach der vorhergehenden Ansprüche, **dadurch gekennzeichnet, daß** das Profilmaterial (20) vor dem Ablängen weichgeglüht wird.

14. Verfahren nach einem der Ansprüche 1 bis 12, **dadurch gekennzeichnet, daß** das Profilstück (10) weichgeglüht wird.

15. Verfahren nach einem der vorhergehenden Ansprüche, **dadurch gekennzeichnet, daß** das Formteil (12) nach dem Pressen ausgehärtet wird.

16. Verfahren nach Anspruch 15, **dadurch gekennzeichnet, daß** das Formteil (12) warmgehärtet wird.

17. Verfahren nach Anspruch 15, **dadurch gekennzeichnet, daß** das Formteil (12) kaltgehärtet wird.

18. Verfahren nach einem der vorhergehenden Ansprüche, **dadurch gekennzeichnet, daß** das Formteil (20) nach dem Pressen einen Materialüberschuß aufweist.

19. Verfahren nach Anspruch 18, **dadurch gekennzeichnet, daß** der Materialüberschuß als wenigstens ein lokaler Ansatz vorliegt, der nach dem Pressen abgetrennt wird.

20. Verfahren nach Anspruch 18, **dadurch gekennzeichnet, daß** der Materialüberschuß als wenigstens ein flächiger Überschuß vorliegt, der nach dem Pressen abgetragen wird.

21. Verfahren nach einem der vorhergehenden Ansprüche, **dadurch gekennzeichnet, daß** das Formteil (12) ein lasttragendes Bauteil eines Fahrzeuginsassen-Rückhaltesystems ist.

## Claims

1. A method of manufacturing shaped parts (12), comprising the following steps:
- a profiled material (20) of an aluminium alloy is prepared;
- a profiled piece (10) of predetermined length is produced by cutting the profiled material (20) to length;
- the profiled piece (10) is placed into a press (14);
- the profiled piece (10) is pressed in the press (14) into the desired shape,
a cold working of the material occurring during pressing, and
the cross-section of the profiled material (20) corresponding to a projection of the shaped part (12) to be produced, plus an excess.

2. The method according to Claim 1, **characterized in that** the configuration of the finished shaped part (12) is analysed by defining an axis (C) and an outline of the shaped part (12) lying in a plane perpendicular to the axis.

3. The method according to Claim 2, **characterized in that** the length of the profiled piece (10) that is cut to length depends on the axial dimension of the configuration of the shaped part (12).

4. The method according to one of Claims 2 and 3, **characterized in that** the cross-sectional shape of the profiled material (20) differs from the outline of the shaped part (12) by the excess.

5. The method according to any of Claims 2 to 4, **characterized in that** the axial dimension of the profiled piece (10) differs from the axial dimension of the shaped part (12) by the excess.

6. The method according to any of Claims 2 to 5, **characterized in that** the excess is less than approximately 25%.

7. The method according to Claim 6, **characterized in that** the excess amounts to between approximately 10% and approximately 20%.

8. The method according to any of Claims 2 to 7, **characterized in that** the axis is the central axis (C) of the shaped part (12) and the cross-section of the profiled material (20) is obtained starting from a projection of the shaped part (12) into the plane perpendicular to the central axis (C).

9. The method according to any of Claims 2 to 7, **characterized in that** the shaped part (12) has a generally flat configuration, the axis (C) is perpendicular to the plane of extent of the shaped part (12), and the cross-section of the profiled material (20) is obtained starting from a projection of the shaped part (12) into the plane perpendicular to the axis.

10. The method according to any of Claims 2 to 9, **characterized in that** the profiled material (20) is produced with the cross-sectional shape adapted to the shaped part (12) to be produced.

11. The method according to Claim 10, **characterized in that** the cross-sectional shape of the profiled material (20) is adapted to the outline of the shaped part (12), which is obtained by projection.

12. The method according to any of the preceding claims, **characterized in that** the profiled material (20) has the strength classification F17 to F50.

13. The method according to any of the preceding claims, **characterized in that** the profiled material (20) is soft-annealed before it is cut to length.

14. The method according to any of Claims 1 to 12, **characterized in that** the profiled piece (10) is soft-annealed.

15. The method according to any of the preceding claims, **characterized in that** the shaped part (12) is hardened after pressing.

16. The method according to Claim 15, **characterized in that** the shaped part (12) is thermally hardened.

17. The method according to Claim 15, **characterized in that** the shaped part (12) is strain-hardened.

18. The method according to any of the preceding claims, **characterized in that** the shaped part (12), after pressing, has an excess of material.

19. The method according to Claim 18, **characterized in that** the excess of material is present in the form of at least one local extension which is cut off after pressing.

20. The method according to Claim 18, **characterized in that** the excess of material is present in the form of at least one sheet-like excess which is removed after pressing.

21. The method according to any of the preceding claims, **characterized in that** the shaped part (12) is a load-bearing component of a vehicle occupant restraint system.

## Revendications

1. Procédé de fabrication de pièces façonnées (12) comprenant les étapes suivantes :
- un matériau profilé (20) en alliage d'aluminium est mis en oeuvre ;
- un segment profilé (20) de longueur prédéterminée est réalisé par tronçonnage du matériau profilé (20) ;
- le segment profilé (10) est introduit dans une presse (14) ;
- le segment profilé (10) reçoit dans la presse (14) la forme souhaitée ;
un écrouissage du matériau se produisant pendant le pressage, et
la section transversale du matériau profilé (20) correspondant à la projection de la pièce façonnée (12) à fabriquer, augmentée d'une surépaisseur.

2. Procédé selon la revendication 1, **caractérisé en ce que** la forme de la pièce façonnée (12) finie est analysée en définissant un axe (C) et un contour de la pièce façonnée (12) situé dans un plan perpendiculaire à l'axe.

3. Procédé selon la revendication 2, **caractérisé en ce que** la longueur du segment profilé tronçonné (10) est déterminée par la mesure axiale de la forme de la pièce façonnée (12).

4. Procédé selon l'une des revendications 2 et 3, **caractérisé en ce que** la forme en coupe transversale du matériau profilé (20) se distingue du contour de la pièce façonnée (12) par la surépaisseur.

5. Procédé selon l'une des revendications 2 à 4, **caractérisé en ce que** la mesure axiale du segment profilé (10) se distingue de la mesure axiale de la pièce façonnée (12) par la surépaisseur.

6. Procédé selon l'une des revendications 2 à 5, **caractérisé en ce que** la surépaisseur est inférieure à environ 25 %.

7. Procédé selon la revendication 6, **caractérisé en ce que** la surépaisseur est comprise entre environ 10 % et environ 20 %.

8. Procédé selon l'une des revendications 2 à 7, **caractérisé en ce que** l'axe est l'axe médian (C) de la pièce façonnée (12) et la section transversale du matériau profilé (20) est obtenue à partir d'une projection de la pièce façonnée (12) dans le plan perpendiculaire à l'axe médian (C).

9. Procédé selon l'une des revendications 2 à 7, **caractérisé en ce que** la pièce façonnée (12) a une forme généralement plate, l'axe (C) est perpendiculaire au plan d'extension de la pièce façonnée (12), et la section transversale du matériau profilé (20) est obtenue à partir d'une projection de la pièce façonnée (12) dans le plan perpendiculaire à l'axe médian.

10. Procédé selon l'une des revendications 2 à 9, **caractérisé en ce que** le matériau profilé (20) est fabriqué avec la forme en coupe transversale adaptée à la pièce façonnée (12) à fabriquer.

11. Procédé selon la revendication 11, **caractérisé en ce que** la forme en coupe transversale du matériau profilé (20) est adaptée au contour, obtenu par projection, de la pièce façonnée (12).

12. Procédé selon l'une des revendications précédentes, **caractérisé en ce que** le matériau profilé (20) appartient à une classe de résistance de F17 à F50.

13. Procédé selon l'une des revendications précédentes, **caractérisé en ce que**, avant d'être tronçonné, le matériau profilé (20) est adouci par recuit.

14. Procédé selon l'une des revendications 1 à 12, **caractérisé en ce que** le segment profilé (10) est adouci par recuit.

15. Procédé selon l'une des revendications précédentes, **caractérisé en ce que** la pièce façonnée (12) subit un durcissement structural après le pressage.

16. Procédé selon la revendication 15, **caractérisé en ce que** la pièce façonnée (12) est durcie à chaud.

17. Procédé selon la revendication 15, **caractérisé en ce que** la pièce façonnée (12) est durcie à froid.

18. Procédé selon l'une des revendications précédentes, **caractérisé en ce que** la pièce façonnée (12) présente un excédent de matériau après le pressage.

19. Procédé selon la revendication 18, **caractérisé en ce que** l'excédent de matériau se présente sous la forme d'au moins une saillie locale qui est sectionnée après le pressage.

20. Procédé selon la revendication 18, **caractérisé en ce que** l'excédent de matériau se présente sous la forme d'au moins un excédent plat qui est éliminé après le pressage.

21. Procédé selon l'une des revendications précédentes, **caractérisé en ce que** la pièce façonnée (12) est un élément structurel porteur d'un système de retenue des passagers d'un véhicule.
